# EUROPÄISCHE PATENTSCHRIFT

(11) **EP 1 459 670 B1**
(45) Veröffentlichungstag und Bekanntmachung des Hinweises auf die Patenterteilung: **11.06.2008**
(21) Anmeldenummer: 04003104.9
(22) Anmeldetag: 12.02.2004
(51) Int. Cl.: A47K 5/12

(54) **Spender für Seifen oder dergleichen mit Pumpe**
Pump dispenser for soap or similar
Distributeur à pompe pour savon ou similaire

(30) Priorität: 19.03.2003 DE 20304359 U
(43) Veröffentlichungstag der Anmeldung: 22.09.2004
(73) Patentinhaber: Ernst Wagner GmbH & Co. KG, 72770 Reutlingen (DE)
(72) Erfinder: Müller-Boysen, Ulrich, Dipl.-Ing., 73732 Esslingen/N (DE); Keusch, Siegfried, Dipl.-Ing., 73779 Deizisau (DE)
(74) Vertreter: Kohler Schmid Möbus

(56) Entgegenhaltungen:
- GB-A- 701 223
- GB-A- 191 019 007
- US-A- 4 165 824

## Beschreibung

Die Erfindung bezieht sich auf einen Spender für Seifen oder dergleichen mit Pumpe, gemäß dem Oberbegriff des Anspruchs 1. Eine solcher Spender ist aus der GB-A-701 223 bekannt. Bei anderen bekannten Ausführungsformen ist der Zylinder und damit der Druckraum an seinem in Schubrichtung des Kolbens vorderen Ende durch eine Membran abgeschlossen, welche mittels einer Hohlschraube zwischen dieser und den Zylinderwänden festgeklemmt ist. Bei einer Reparatur - vor allem, wenn der Kolben ersetzt werden muss - ist es erforderlich, die Hohlschraube zu lösen, die Membran zu entfernen und dann noch den Kolben herauszunehmen. Abgesehen von der etwas umständlichen Handhabung ergeben sich meist Schwierigkeiten beim nachfolgenden Zusammenbau der Teile, da die Membran exakt eingesetzt werden muss und sich in ihrer Lage beim Festklemmen durch die Hohlschraube nicht verschieben darf, um Undichtigkeiten zu vermeiden.

Um eine Vereinfachung des Aufbaues der Pumpe und eine Erleichterung bei Reparaturen zu schaffen, ist die Membran erfindungsgemäß am Hohlkolben angeordnet und schließt ihn an seinem in Schubrichtung hinteren Ende ab. Bei Reparaturen oder einem Auswechseln des Kolbens muss nunmehr nur noch der Kolben herausgezogen werden und anschließend wieder eingesetzt bzw. durch einen neuen ersetzt werden. Dagegen entfällt ein Lösen und Wiedereinsetzen der Membran völlig. Mit einer solchen Ausführungsform ist es auch einem Laien möglich, die Pumpe selbst zu warten, ohne dass er nach dem Zusammenbau mit Undichtigkeiten rechnen muss.

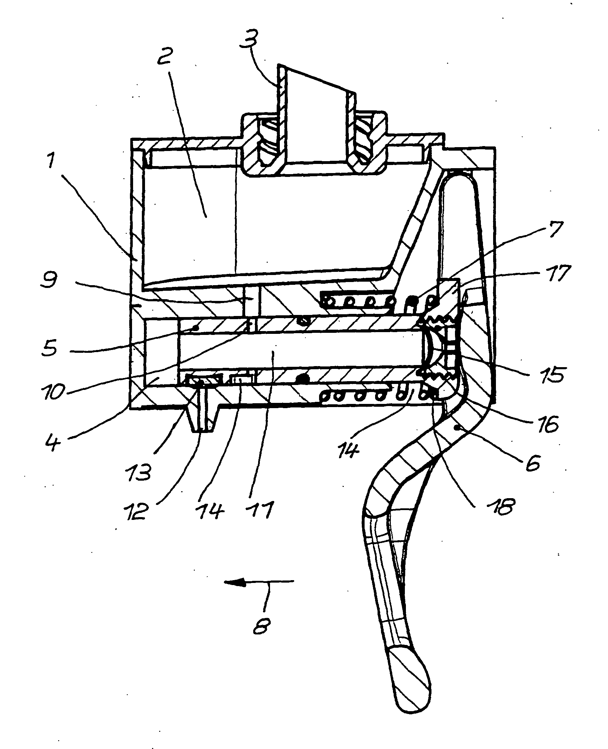

Die Zeichnung zeigt ein Ausführungsbeispiel der Erfindung, und zwar einen Querschnitt durch die Pumpe eines Seifenspenders.

Im Pumpengehäuse 1 ist ein Zwischenbehälter 2 für Seife vorgesehen, welche diesem aus einem nicht dargestellten Vorratsbehälter über den Stutzen 3 zugeführt wird. Unterhalb des Zwischenbehälters ist ein Zylinder 4 vorgesehen, in welchem ein Hohlkolben 5 mittels eines Handhebels 6 gegen die Kraft einer Feder 7 in Vorschubrichtung 8 zum Druckaufbau verschoben werden kann.

Der Zwischenbehälter 2 weist einen Auslass 9 auf, welcher in der aus der Zeichnung zu entnehmenden Grundstellung des Hohlkolbens 5 über eine Querbohrung 10 mit dem Inneren 11 des Hohlkolbens 5 in Verbindung steht. Die Spenderöffnung 12 des Zylinders 4 ist in dieser Stellung durch eine Dichtung 13 verschlossen. Sobald der Kolben 5 in Pfeilrichtung 8 verschoben wird, kommen die mit dem Hohlkolbeninnere 11 in Verbindung stehende Öffnung 14 des Hohlkolbens 5 und die Spenderöffnung 12 zur Deckung, während die Querbohrung 10 verschlossen wird.

Der Hohlkolben 5 ist an seinem in Vorschubrichtung 8 hinteren Ende 14 durch eine Membran 15 abgeschlossen. Dabei wird die Membran durch eine auf das Gewinde 16 des Hohlkolbens 5 aufgeschraubte Hohlmutter 17 an den Hohlkolben 5 angepresst. Für die Hohlmutter 17 ist am Hohlkolben 5 noch eine Verdrehsicherung 18 vorgesehen.

In der Ausgangsstellung des Hohlkolben 5 kann Seife durch die Querbohrung 10 in den Hohlkolben 5 und damit in den Zylinder 4 eintreten. Bei Betätigung des Handhebels 6 wird der Hohlkolben 5 in Pfeilrichtung 8 verschoben, sodass sich die Membran 15 durch den auftretenden Druck auswölbt. Dabei wird gleichzeitig die Querbohrung 10 verschlossen, sodass keine Seife in den Zwischenbehälter 2 zurückfließen kann. Sobald die Öffnung 14 des Hohlkolbens 5 über der Spenderöffnung liegt, kann Seife aus dieser austreten, wobei der Druck nachlässt und die Membran 15 sich entspannt.

Zum Auswechseln des Kolbens 5 oder zur Durchführung einer Reparatur können der Kolben 5 nach Abnahme des Handhebels 6 aus dem Zylinder 4 entgegen der Pfeilrichtung 8 nach hinten herausgezogen und die Reparaturarbeiten vorgenommen werden, ohne dass die Membran 15 entfernt und wieder neu eingesetzt werden muss. Dadurch werden die Wartungsarbeit erleichtert und nachträgliche Undichtigkeiten mir Sicherheit verhindert.

## Patentansprüche

1. Spender für Seifen odgl. mit Pumpe, welche einen in einem Zylinder (4) gegen Federkraft (7) verschiebbaren, in Vorschubrichtung (8) vorne offenen und mindestens in seiner Ausgangslage mit einem Seifenbehälter (2) verbundenen Hohlkolben (5) aufweist, wobei der Druckraum durch eine Membran (15) abgeschlossen ist, die am Hohlkolben (5) angeordnet ist, **dadurch gekennzeichnet, dass** die Membran (15) den Hohlkolben (5) an seinem in Vorschubrichtung (8) hinteren Ende (14) abschliesst.

2. Spender nach Anspruch 1, **dadurch gekennzeichnet, dass** die Membran (14) durch einen Hohlstutzen (17) am Hohlkolben (5) befestigt ist.

3. Spender nach Anspruch 2, **dadurch gekennzeichnet, dass** der Hohlstutzen als Hohlmutter (17) ausgebildet ist, welche auf das mit Gewinde (16) versehenen Ende (14) des Hohlkolbens (5) aufgeschraubt ist.

4. Spender nach Anspruch 3, **dadurch gekennzeichnet, dass** der Hohlkolben (5) für die Hohlmutter (17) eine Verdrehsicherung (18) aufweist.

5. Spender mit einem aus Kunststoff bestehenden Hohlkolben nach einem oder mehreren der vorhergehenden Ansprüche, **dadurch gekennzeichnet, dass** der Hohlkolben (5) mit der Membrane (14) aus einem Stück gespritzt ist.

## Claims

1. Dispenser for soaps or the like, having a pump which has a hollow piston (5) which can be displaced in a cylinder (4) counter to resilient force (7), which is open at the front in a feed direction (8) and which is connected to a soap container (2) at least in the initial position thereof, the pressure space being closed by membrane (15) which is arranged on the hollow piston (5), **characterised in that** the membrane (15) closes the hollow piston (5) at the rear end (14) thereof in the feed direction (8).

2. Dispenser according to claim 1, **characterised in that** the membrane (14) is secured to the hollow piston (5) by means of a hollow connection piece (17).

3. Dispenser according to claim 2, **characterised in that** the hollow connection piece is constructed as a hollow nut (17), which is screwed onto the end (14) of the hollow piston (5) that is provided with a thread (16).

4. Dispenser according to claim 3, **characterised in that** the hollow piston (5) has a twisting prevention means (18) for the hollow nut (17).

5. Dispenser having a hollow piston which comprises plastics material according to one or more of the preceding claims, **characterised in that** the hollow piston (5) is injection-moulded in one piece with the membrane (14).

## Revendications

1. Distributeur de savons ou analogue, doté d'une pompe qui présente un piston creux (5) mobile conte la force d'un ressort (7) à l'intérieur d'un cylindre (4), ouvert à l'avant par rapport au sens d'avance (8) et relié à un réservoir de savon (2) au moins dans sa position initiale, l'espace sous pression étant fermé par une membrane (15) disposée sur le piston creux (5), **caractérisé en ce que** la membrane (15) ferme le piston creux (5) à son extrémité arrière (14) par rapport au sens d'avance (8).

2. Distributeur selon la revendication 1, **caractérisé en ce que** la membrane (15) est fixée sur le piston creux (15) par un manchon creux (17).

3. Distributeur selon la revendication 2, **caractérisé en ce que** le manchon creux est réalisé en tant qu'écrou creux (17) vissé sur l'extrémité (14) du piston creux (5) dotée d'un filetage (16).

4. Distributeur selon la re vendication 3, **caractérisé en ce que** le piston creux (5) présente une sécurité antirotation (18) pour l'écrou creux (17).

5. Distributeur doté d'un pison creux en matière plastique selon l'une ou plusieurs des revendications précédentes, **caractérisé en ce que** le piston creux (5) et la membrane (14) sont moulés par injection d'un seul tenant.
